# EUROPEAN PATENT APPLICATION

(11) **EP 2 732 705 A1**
(43) Date of publication of application: **21.05.2014**
(21) Application number: 12192561.4
(22) Date of filing: 14.11.2012
(51) Int. Cl.: A01N 25/00, A01N 25/24

(54) **Use of high molecular weight polyethylene oxide as combined simultaneous anti-drift and deposition agents**

(71) Applicant: Bonn, Daniel, 1015AB Amsterdam (NL)
(72) Inventor: Bonn, Daniel, 1015AB Amsterdam (NL)

(57) **Abstract**

The invention concerns the use of polymers, notably high molecular weight polyethylene oxide, in aqueous solutions simultaneously as anti-drift agents in sprays and as deposition agents on water-repellent surfaces. The aqueous polymer solutions to be employed have a viscosity of at most ten times that of water, and a first normal stress coefficient that exceeds 10⁻⁸ Pas².

## Description

The present invention relates to the use of compounds with certain characteristics of normal stresses and viscosity, as a combined anti-drift and deposition agent in formulations implemented in the presence of an aqueous solution to be sprayed onto surfaces.

The present invention more particularly relates to the field of plant protection formulations, including pesticides or agents controlling plant growth that are usually applied by spray deposition onto plant leaves as a solution, dispersion or emulsion in an aqueous medium.

The main challenge in efficiently depositing pesticides on plant leaves while not polluting ground and surface water are two contradicting demands on the spray. For efficient deposition, one needs the drop size to be small, to prevent loss of a large part of the active ingredient because of droplets rebounding off the hydrophobic plant leaves. On the other hand to minimize spray drift, the blowing away of droplets by the wind, one needs large droplets. In addition to the economic disadvantage of losing product, spray drift is one of the main causes of water pollution, since the blown away droplets can end up in the surface or ground water. To resolve the deposition problem, it was proposed to introduce additives to greatly reduce the surface tension of the formulations. However, this solution is far from ideal as such formulations increase spray drift.

There is currently no additive available for formulations intended to be implemented in the presence of an aqueous solution, which produces large enough droplets to minimize spray drift, but still ensures good deposition and coverage.

The present invention therefore aims to overcome these difficulties.

It is the use as a combined anti-drift and deposition agent, in formulations designed to be implemented in presence of an aqueous solution, of at least one polymeric compound having elevated normal stresses and a viscosity of less than or equal to three times that of water, these viscosities being measured for concentrations of compound included between 0.01 and 2 g/l.

In the final formulation, the aqueous solution with improved anti-drift and deposition properties has not more than ten times the viscosity of water, so that it can still easily be pumped and sprayed.

The deposition improvement is characterized by a better adhesion of the droplets to the possibly hydrophobic surface (plant leaves) that droplets impact on; thus more is retained by the surface, even if it is inclined. Thus, it is no longer necessary to implement a surfactant additive to improve deposition and/or penetration of the active substance.

The reduction in spray drift is achieved simultaneously with the same formulation that reduces significantly the amount of droplets of small size, which are mainly responsible for the drift. For agricultural sprays, the main challenge is to reduce the number of droplets with a size smaller than 100 µm, since these are the main cause of water pollution by spray drift.

The agent of the present invention can be advantageously implemented in tank-mix, that is to say, be mixed with the formulation just before application, but it can also be employed in other ways, such as added to the pesticides before mixing them with the water.

Finally, the agent of the present invention can enter into the composition of many plant protection formulations which are intended to be applied in aqueous media. For example, these may be solid formulations, such as, wettable powders, dispersible granules, as well as liquid formulations such as emulsifiable concentrates, suspensions, suspo-emulsions, concentrated emulsions.

Other advantages and features will emerge more clearly whilst reading the following description.

As has been mentioned above, the present invention relates to the use as a combined anti-drift and deposition agent in formulations intended to be implemented in the presence of an aqueous solution of at least one compound with an elevated normal stress coefficient and a viscosity of less than or equal to ten times that of water in the final formulation; these viscosities are measured for concentrations of the compound included between 0.01 and 2 g/l.

By normal stress we mean the stress difference between the flow direction and the two directions perpendicular to it exerted during the flow of a fluid in simple shear flow. The first normal stress coefficient is the coefficient of proportionality between the first normal stress difference and the square of the velocity gradient. By viscosity we mean the viscosity in a simple shear flow of a fluid.

To be more precise about these definitions, we can refer to the following book: Dynamics of polymeric liquids. Vol. 1: Fluid mechanics Bird, R.B. ; Armstrong, R.C. ; Hassager, O. John Wiley and Sons Inc., New York, NY, 1987.

In a particular realization of this invention, the first normal stress coefficient is greater than or equal to 10⁻⁸ Pas². Regarding the viscosity of the final formulation, in a particular realization of this invention, it is less than or equal to ten times that of water.

The compound used as a deposition improving agent increases adherence of the droplets to any hydrophobic surface. This is evident by the slowing down of retraction after impact. After impact, the droplet spreads out and the retraction is the diminution of the drop diameter. The retraction speed typically becomes significantly lower than the value for pure water; for water it is around 1 m/s for a droplet radius of 1.3 mm and an impact velocity of 2.5 m/s; if the agent of the present invention is added at a typical concentration of 0.5g/l the retraction speed is more than a factor of ten lower. This allows the droplet to remain stuck to the surface.

Advantageously, the same compound used as a drift reducing agent dramatically decreases the number of small droplets in a spray. If the spray is made with a standard nozzle used in agriculture (Teejet 110), and a standard pressure of 4 bars, typically 5 volume% of the sprayed liquid is present in the form of droplets smaller than 100 µm; these are so small that they easily drift away with the wind. If the agent of the present invention is added at a typical concentration of 0.5g/l, this percentage is reduced by at least one quarter.

The main compound implemented in the invention is polyethylene oxide, having a molecular weight between 5·10⁴ and 10⁸ g/mole, which is readily biodegradable. For formulation purposes, this compound can be mixed with several others, such as other co-polymers, surfactants and solvents. Thus, the invention concerns solutions or powders that comprise at least one polymer chain whose molecular weight is within the ranges above. Moreover, this chain is soluble in aqueous solutions, containing up to 100% water. The compound being present at a concentration between 0.01 and 2 g/l.

The category of compounds that would be used in a proper way as simultaneous anti-drift and deposition agents, consists of polyoxyalkylene glycol derivatives, notably polyethylene oxide.

Note that, depending on the nature of the compound implemented, the aqueous medium may be supplemented by a base or acid, so as to have its pH adjusted so that the solubility of the compound meets the criteria mentioned previously.

The compound used as an anti-drift and deposition agent may be present as a single compound, several compounds in the same category or several compounds for multiple classes.

The anti-drift and deposition compound of the invention can be implemented in the formulation of pesticides, as a tank-mix additive, that is to say that it is added to the solution or dispersion to be sprayed onto the plants, or added in any other way to the pesticide solution or dispersion to be sprayed onto the plants.

In the best range, the total concentration of the compound in the formulation is more particularly between 0.01 and 2 g/l. A more precise variant, said concentration ranges between 0.05 and 0.5 g/l. It should be noted that this concentration range is given for the final formulation, that is to say the aqueous solution that will be put in contact with the plant to be treated.

Consequently, if the compound is implemented in tank mix, then the quantity used is calculated so that the concentration is in the final formulation in the range previously indicated.

The anti-drift and deposition compound of the present invention can be very advantageously implemented in any formulation plant based active ingredients of the kind of pesticides (herbicides, insecticides, fungicides, etc..) or nutrients, additives or growth control producers.

The present invention can be advantageously applied to any type of formulation, the extent it is intended to be placed in the presence of an aqueous solution or dispersion before being applied to plants to be treated. In other words, formulations, before dilution, can be found in the form of liquid or solid.

It is noted that conventionally, the pesticide formulations are diluted in an aqueous medium prior to application.

The active ingredients used in the composition of such formulations plant can be solid, water soluble, water-dispersible.

As an example of suitable active material include among others, Basta, Roundup, Spotlight, Teppeki, UNIX, Thiovit, Fungistop, Regione, Supreme, Hussar, Calliste, Citadelle, Mikado, Milagro, Parlay, Scala, Equip, Karate Zeon, Evidan, Mancozeb, Shirlan.

The components of plant protection formulations are those commonly used in the formulations of this area.

Thus, they usually consist of surfactants which are used to stabilize an emulsion, suspension, or emulsion-suspo, facilitate the dispersion of the active ingredient, to promote wetting with other components of the formulation. Such surfactants can be ionic or non-ionic. The amount of surfactant depends on the form of the formulation. These surfactants do not alter either the drift reduction or the deposition efficiency in a significant way, the agents being discussed for the present invention being much more efficient than the surfactants used in usual agricultural formulations.

The formulations may include other conventional additives in the field, which may include wetting agents, dispersants, disintegrants, binders, anti-caking and/or stabilizers. Neither of these has a significant impact on the drift-reducing or deposition improving capabilities of the agents discussed here.

The formulations can, if necessary, include one or more inert fillers such as clays, synthetic silicas and diatomaceous earth, silicates of calcium or magnesium, titanium dioxide, oxides of aluminum, zinc or calcium carbonates calcium or magnesium, sodium sulfate, ammonium, calcium, carbon black, alone or in combination.

The amount of charge, if present, can be determined without difficulty by an experienced person.

The formulations according to the invention are obtained by implementing the conventional methods in the field.

Thus, if your formulations are in the form of solutions, suspensions, emulsions, suspo-emulsions, we proceed by putting together the components of the formulation, possibly in presence of an anti-rebound whose use is the object of the invention, if it is not implemented in tank-mix.

The operation is usually performed under stirring at a temperature close to room temperature.

It should be noted that we can introduce the conventional additives in the preparation of the formulation, such as anti-foaming agents, chosen for example from silicone substances.

### EXAMPLE

When spraying with a Flat Fan Nozzle (11002), at four bars of spraying pressure, the volume percentage of the spray that consists of droplets smaller than 100 µm is above 3-4% for water with or without a generic pesticide such as Shirlan. These small droplets are the ones responsible for the drift. When 0.1 g/l of a large molecular weight flexible polymer is added this percentage is smaller than 1%. In drift simulations with the **AgDRIFT** ® **2.0.1** software package from the American ministry of agriculture, this leads to a drift reduction from 2% of the spray volume for pure water, to less than 0.1 % with the polymer. Simultaneously, deposition on the plants is improved. Laboratory tests with the same formulation show that when onion leaves are passed through the same spray at a speed of 0.5 m/s, Shirlan deposition is improved with more than 30% with the polymer added. This was concluded from subsequently washing the leaves and dosing the amount of Shirlan in the washing water.

## Claims

1. A polymeric additive to spraying liquids of which the main compound implemented is polyethylene oxide, having a molecular weight between 5·10⁴ and 10⁸ g/mole.

2. A polymeric additive as in claim 1, **characterized in that** it serves as combined anti-drift and deposition agent in order to greatly increase spray deposition efficiency. The deposition improvement is **characterized by** a better adhesion of the droplets to the possibly hydrophobic surface (plant leaves) that droplets impact on; thus more is retained by the surface, even if it is inclined. The same compound used as a drift reducing agent dramatically decreases the number of small droplets in a spray. The anti-drift and deposition-increasing properties of the additive can be very advantageously implemented in any formulation of plant based active ingredients of the kind of pesticides, nutrients, or growth control producers; possibly in combination with other additives in the field, which may include wetting agents, dispersants, disintegrants, binders, anti-caking and/or stabilizers.

3. A polymeric additive as described in claim 1, **characterized in that** the additive is used in formulations designed to be implemented in presence of an aqueous solution, **characterized in that** the resulting polymer solution has elevated normal stresses and a viscosity of less than or equal to three times that of water, these viscosities being measured for concentrations of compound included between 0.01 and 2 g/l. The aqueous polymer solutions to be employed have a first normal stress coefficient that exceeds 10⁻⁸ Pas².
